(19) Europäisches Patentamt / European Patent Office / Office européen des brevets

(11) **EP 1 845 072 B1**

(12) **EUROPEAN PATENT SPECIFICATION**

(45) Date of publication and mention
of the grant of the patent:
**28.09.2016 Bulletin 2016/39**

(21) Application number: **06701433.2**

(22) Date of filing: **24.01.2006**

(51) Int Cl.:
*C04B 35/119* (2006.01)    *C04B 35/488* (2006.01)
*C04B 35/64* (2006.01)    *C04B 35/63* (2006.01)
*C04B 35/645* (2006.01)

(86) International application number:
**PCT/JP2006/301385**

(87) International publication number:
**WO 2006/080473 (03.08.2006 Gazette 2006/31)**

(54) **COMPOSITE CERAMIC AND METHOD FOR PRODUCING SAME**

MISCHKERAMIK UND HERSTELLUNGSVERFAHREN DAFÜR

CÉRAMIQUE COMPOSITE ET PROCÉDÉ DE FABRICATION DE LADITE CÉRAMIQUE

(84) Designated Contracting States:
**DE FR GB IT**

(30) Priority: **27.01.2005   JP 2005019708**
**27.06.2005   JP 2005186497**

(43) Date of publication of application:
**17.10.2007   Bulletin 2007/42**

(73) Proprietor: **Kyocera Corporation**
**Kyoto-shi, Kyoto-fu 612-8501 (JP)**

(72) Inventors:
• **SHIKATA, Kunihide**
**Kirishima-shi,**
**Kagoshima 8994312 (JP)**
• **WANG, Yucong**
**Kirishima-shi,**
**Kagoshima 8994312 (JP)**
• **SENO, Hiroaki**
**Kirishima-shi,**
**Kagoshima 8994312 (JP)**

• **ONITSUKA, Shugo**
**Kirishima-shi,**
**Kagoshima 8994312 (JP)**

(74) Representative: **Viering, Jentschura & Partner**
**mbB**
**Patent- und Rechtsanwälte**
**Grillparzerstraße 14**
**81675 München (DE)**

(56) References cited:
**JP-A- 05 017 210    JP-A- 05 017 210**
**JP-A- 09 286 660    US-A- 5 002 911**

• **SCHMID C ET AL: "The Synthesis of Calcium or Strontium Hexaluminate added ZTA Composite Ceramics", JOURNAL OF THE EUROPEAN CERAMIC SOCIETY, ELSEVIER SCIENCE PUBLISHERS, BARKING, ESSEX, GB, vol. 19, no. 9, 1 July 1999 (1999-07-01), pages 1741-1746, XP004165942, ISSN: 0955-2219, DOI: DOI:10.1016/S0955-2219(98)00277-5**

EP 1 845 072 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to highly strengthened, highly toughened, and highly wear-resistant composite ceramic and methods for making such composite ceramic. In particular, it relates to a composite ceramic suitable for use in various structures or components of the structures and to a method for making such a composite ceramic.

Background Art

Recently, ceramic are applied to various structures or components of the structures for their superior mechanical properties, corrosion resistance, and other favorable properties. For example, the ceramic are applied to various cutting and machine tools, mechanical components such as bearings, and biocompatible components such as artificial joints. Patent document 1 discloses an example of the ceramic for use in such applications, which is a zirconia-based composite ceramic containing an alumina particles and a zirconia particles stabilized by $CeO_2$ and $Y_2O_3$. This composite ceramic contains a zirconia particles mostly composed of tetragonal crystals and has superior mechanical properties such as strength and toughness and high resistance to hydrothermal degradation.
Patent document 2 below discloses a highly toughened alumina-zirconia composite ceramic containing alumina and zirconia as principal elements, and an alkaline-earth metal oxide and silicon oxide added to these principal elements.

Patent document 1: Japanese Examined Patent Application Publication No. 7-64631
Patent document 2: Japanese Patent No. 2910020

Disclosure of Invention

The zirconia-based composite ceramic described in Patent document 1 is a zirconia-rich sintered body containing 3 to 60 percent by weight of alumina relative to stabilized zirconia and has an average crystal diameter of 3 $\mu$m or less. Although the flexural strength, toughness, and resistance to hydrothermal degradation are high, the hardness is low, which renders the ceramic unsuitable for wear-resistant materials.
In contrast, the alumina-zirconia composite ceramic described in Patent document 2 has high toughness but low mechanical strength due to extraordinary grain growth in the alumina particles. Moreover, the ceramic has particularly low resistance to hot water and has a disadvantage in that the flexural strength considerably drops after hydrothermal degradation test.
JP05017210 describes the production of an alumina-based composite sintered body. US 5,002,911 describes ceramics with high toughness, strength and hardness. The synthesis of calcium or strontium hexaluminate added ZTA composite ceramics is described in the Journal of the European Ceramic Society, 19 (1999) 1741-1746.
Thus, an object of the present invention is to provide a composite ceramic having high flexural strength, toughness, and hot-water resistance (hydrothermal degradation resistance), and high hardness useful as a wear-resistance material, and to a method for making such a composite ceramic.
The present invention provides a composite ceramic as defined in claim 1.
The composite ceramic of the present invention preferably has the following features:

(1) The columnar crystal (C) of the complex metal oxide has an aspect ratio greater than 3.
(2) The alumina particles (A) and the zirconia particles (B) are present at a ratio (A/B) by mass of 65/35 to 90/100.
(3) The average crystal diameter of the alumina particles (A) is 1. 5 $\mu$m or less and the average crystal diameter of the zirconia particles (B) is 0.5 $\mu$m or less.
(4) The complex metal oxide of the columnar crystal (C) is at least one selected from the group consisting of $Ca_3Ti_8Al_{12}O_{37}$, $SrTi_3Al_8O_{19}$ and $Ba_3TiAl_{10}O_{20}$.
(5) The Vickers hardness is 1600 (Hv) or more, the fracture toughness is 4.5 or more, and the flexural strength after hydrothermal degradation test is 1050 MPa or more.

The present invention also provides a method for making a composite ceramic of the invention as defined above, including:

a step of mixing an alumina powder having an average particle diameter of 2 $\mu$m or less with a powder containing an alkaline-earth metal element and a titanium compound;
preliminarily calcining the resulting mixed powder such that the alumina powder bonds to the powder containing the alkaline-earth metal element and the titanium compound;

preparing a molding powder by mixing the resulting calcined powder with a zirconia powder having an average particle diameter of 0.5 $\mu$m or less; and

molding the molding powder into a predetermined shape and firing the molded powder at 1600°C or less in an oxidizing atmosphere.

The method of the present invention preferably has the following features:

(1) At least one of a strontium carbonate powder, a calcium carbonate powder, and a barium carbonate powder is used as the powder containing the alkaline-earth metal element.
(2) Along with the powder containing the alkaline-earth metal element, a titanium oxide powder is mixed with the alumina powder.
(3) Per total of 100 parts by mass of the alumina powder and the zirconia powder mixed after the preliminary calcining, 0.2 parts by mass or more of the titanium oxide powder and 0.2 parts by mass of the powder containing the alkaline-earth metal element are used.
(4) Hot isostatic pressure firing at 1500°C or less is performed after the firing step.

The present invention also provides a sliding component and a biocompatible component composed of the composite ceramic.
The present invention also provides the use of the composite ceramic of the invention as a sliding component.
For the purpose of this specification, "granular particles "refers to a crystal grain having an aspect ratio of 3 or less, the aspect ratio being the ratio of the major axis to the minor axis of the crystal grain determined from, for example, an electron micrograph, and means that the shape of the particles does not have a directional characteristic. The aspect ratio of the particles is the ratio of the major axis of a crystal grain appearing in a cross-section to the minor axis perpendicular to the major axis of the crystal grain.
Since the alumina particles and the zirconia particles are both granular, the composite ceramic of the present invention has high strength, high hardness, and high wear resistance. Moreover, since the columnar crystal of the complex metal, oxide containing the alkaline-earth metal, aluminum and titanium is formed between the granular alumina particles and the granular zirconia particles, the composite ceramic has high toughness and high resistance to hot water. For example, the decrease in flexural strength after hydrothermal degradation test is effectively suppressed.
The composite ceramic of the present invention having such characteristics is useful as various structures and components of the structures, e.g., cutting and machine tools, mechanical components such as bearings, and biocompatible components such as artificial joints. In particular, it is useful as sliding components such as ball bearings and artificial joints.

Brief Description of the Drawings

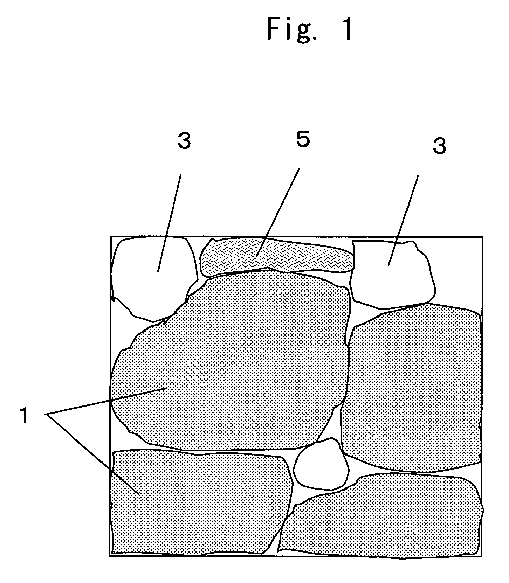

Fig. 1 is a schematic view showing a microstructure of a composite ceramic of the present invention.

Best Mode for Carrying Out the Invention

The present invention will now be described in detail using a specific example shown in the attached drawing.

(Structure of composite ceramic)

Referring to Fig. 1, a composite ceramic of the present invention contains granular alumina particles 1 and granular zirconia particles 3 as the particles and a columnar crystal 5 between these particles, the columnar crystal being composed of a complex metal oxide containing an alkaline-earth metal, aluminum and titanium.
In other words, although the alumina particles 1 and the zirconia particles 3, which are the main particles in a sintered body, have isotropic granular structures, since columnar crystal 5 composed of a particular complex metal oxide is formed between the granular particles in the composite ceramic, the grain growth in the alumina particles and the zirconia particles is effectively suppressed. Moreover, a decrease in strength of the sintered body caused by grain growth can be effectively avoided to achieve high strength, and not only mechanical properties such as toughness, flexural strength, and hardness, but also resistance to hot water can be improved.

-- Alumina particles 1 and zirconia particles 3 --

As can be understood from Fig. 1, preferably, the composite ceramic of the present invention is basically alumina-rich. For example, the ratio by mass of the alumina particles 1 to the zirconia particles 3 is preferably in the range of:

```
Alumina particles /zirconia particles = 65/35 to 90/10,
particularly preferably 75/25 to 85/15
```

Such an alumina-rich composition is advantageous in achieving high hardness and improved wear resistance.

Since the grain growth in the alumina particles 1 is effectively suppressed, the average crystal grain diameter is usually 1.5 $\mu$m or less and particularly in the range of 0.6 to 1.3 $\mu$m. High strength and high toughness are achieved thereby.

The average crystal grain diameter of the zirconia particles 3 is preferably smaller than that of alumina and is preferably 0.5 $\mu$m or less and more preferably in the range of 0.1 to 0.4 $\mu$m. In other words, according to the present invention, both the alumina particles 1 and the zirconia particles 3 have a microstructure in which the grain growth is effectively suppressed; thus, high strength and high toughness are achieved by fine crystals and high density.

As described above, the composite ceramic of the present invention is preferably alumina-rich and the average grain diameter of the zirconia particles 3 is preferably smaller than that of the alumina particles 1. According to this structure, a structure having the alumina particles 1 as a matrix and the zirconia particles 3 dispersed in the alumina matrix is formed, and stability is enhanced by the compressive stresses from the alumina matrix. That is, even when the amount of stabilizer contained in the zirconia particles 3 is small, the zirconia particles 3 can be stabilized as a tetragonal crystal, thereby suppressing precipitation of monoclinic and cubic crystals. As a result, the strength (such as flexural strength) and toughness are enhanced, and the hardness is increased. For example, while a large amount of stabilizer usually suppresses stress-induced transformation and decreases the flexural strength and toughness, such problems attributable to the stabilizer as degradation in mechanical properties can be effectively avoided according to the present invention.

$Y_2O_3$ usually employed as a stabilizer for zirconia is a trivalent oxide and forms oxygen vacancies once dissolved in zirconia ($ZrO_2$), which is a tetravalent oxide. These oxygen vacancies interact with water to break bonds in zirconia, causing hydrothermal degradation. In other words, when $Y_2O_3$ is employed as a stabilizer for the zirconia particles 3 to stabilize zirconia in tetragonal crystals, hot-water resistance is excessively decreased. For example, the flexural strength after hydrothermal degradation test decreases notably. However, according to the composite ceramic of the present invention, the zirconia particles 3 can be stabilized without using a stabilizer such as $Y_2O_3$, and thus degradation in hot-water resistance by $Y_2O_3$ can be effectively avoided.

As can be understood from the description above, the composite ceramic of the present invention preferably contains no or trace amounts of stabilizer if the stabilizer should be contained. In particular, the amount of stabilizer for the zirconia particles 3 is preferably 2 mol% or less of zirconia ($ZrO_2$). In order to enhance stability of the tetragonal crystal phase of the-zirconia particles 3 after sintering, trace amounts of other stabilizers (e.g., oxides of Sc, Ce, Yb, and the like) may be added. Such other stabilizers may be added by taking a form, such as salts or alkoxides, that can be converted to oxides at the final stage.

-- Columnar particles 5 --

In the present invention, it is very important for the columnar crystal 5 of a complex metal oxide containing an alkali earth metal, aluminum and titanium to be present at the grain boundaries between the alumina particles 1 and the zirconia particles 3. During firing, the alkaline-earth metal reacts with alumina to give a complex metal oxide containing the alkaline-earth metal and alumina, the complex metal oxide precipitating as a columnar crystal 5 having an aspect ratio of 3 or more. Generation of such a columnar crystal 5 suppresses grain growth in the alumina particles 1 and the zirconia particles 3, and as a result the particles 1 and 3 are formed as granular grains with an aspect ratio of 3 or less. Thus, a decrease in strength by grain growth can be effectively suppressed, and high strength can be achieved.

In the present invention, formation of the columnar crystal 5 also increases the toughness. For example, when the columnar crystal 5 is absent, deflection of cracks does not easily occur and cracks propagate linearly, resulting in decreased fracture toughness. Moreover, although the toughness is maintained, grain growth easily occurs in the alumina particles and causes degradation in flexural strength and wear resistance. In particular, hot-water resistance is degraded and the flexural strength after the hydrothermal degradation test is significantly decreased.

Since the columnar crystal 5 has a lower hardness than the alumina particles 1, the columnar crystal 5 decreases the hardness if contained in a large amount and also decreases the strength if the size is large. Thus, it is preferable to precipitate a columnar crystal 5 having an adequate size that does not cause a decrease in hardness or strength. The columnar crystal 5 is present in an amount such that when a cross-section of the composite ceramic is observed with an electron microscope, the area occupied by the columnar crystal 5 in a 4.5 $\mu$m $\times$ 6.0 $\mu$m area is 1 to 20% and particularly 1 to 10% of the total area of the alumina particles 1 and the zirconia particles 3. This is suitable for enhancing mechanical properties such as toughness, flexural strength, and hardness.

In the present invention, the alkaline-earth metal used for forming the complex metal oxide of the columnar crystal 5 is any one of Ca, Sr, and Ba . Strontium (Sr) is particularly preferred. When Sr is used to form the columnar crystal 5 of the complex metal oxide, the amount of Sr used is preferably as small as possible to enhance mechanical strength, effectively suppress grain growth by suppression of generation of a liquid phase at low temperatures, and to decrease the toxicity of the component.

As described briefly above, the columnar crystal 5 composed of the complex metal oxide is a derivative of an alkaline-earth metal compound used as an auxiliary agent. For example, by mixing an alkaline-earth metal compound and a titanium compound with alumina and zirconia and firing the resulting mixture, the alkaline-earth metal reacts with part of alumina to precipitate the columnar crystal 5 composed of the complex metal oxide containing the alkaline-earth metal element, aluminum element (Al) and the element titanium. The complex metal oxide constituting the columnar crystal 5 is typically represented by the following formula:

$$Ca_3Ti_8Al_{12}O_{37};$$
$$SrTi_3Al_8O_{19}; \text{ or}$$
$$Ba_3TiAl_{10}O_{20}.$$

In the composite ceramic of the present invention, the amount of the alkaline-earth metal (Ca, Sr, or Ba) on an oxide basis is preferably at least 0.24 percent by mass per total of 100 percent by mass of the alumina particles and the zirconia particles so that the ratio of the area of the columnar crystal 5 composed of the complex metal oxide satisfies the above-described area ratio. In particular, titanium (Ti) and the alkaline-earth metal (Ca, Sr, or Ba) are preferably contained in a total amount of 0.4 to 3 percent by mass on an oxide basis.

-- Other components

In addition to the individual components described above, the composite ceramic of the present invention may contain components (such as $SiO_2$ and MgO) derived from a sintering aid other than the alkaline-earth metal compound. Such oxide components are usually found at grain boundaries of the particles, but part of the oxide components sometimes forms solid solutions in the particles.

As described above, according to the composite ceramic of the present invention, the decrease in strength due to an increased amount of alumina is effectively avoided, and high strength and high toughness are achieved. For example, the Vickers hardness is 1600 (Hv) or more, and the fracture toughness is 4.5 or more. The flexural strength is 1050 MPa or more even after hydrothermal degradation test.

The composite ceramic of the present invention having such properties are extremely useful as various structural components, e.g., various cutting and machine tools, bearing components such as ball bearings, and sliding components such as artificial joints.

(Production of composite ceramic)

The composite ceramic of the present invention is made by preparing various powdered starting materials usable as an alumina crystal source, a zirconia crystal source, and source materials of a columnar crystal of a complex metal oxide containing an alkaline-earth metal element and alumina, mixing the powdered starting materials at a particular ratio to prepare a molding mixed powder, and then molding and firing the mixed powder.

-- starting materials --

An alumina powder is used as the alumina crystal source. The average particle diameter of the alumina powder is preferably 2 $\mu$m or less, more preferably 1 $\mu$m or less, and most preferably 0.6 $\mu$m or less. When a coarse powder having a large average crystal diameter is used, the sintering temperature becomes high and the average crystal grain diameter of the alumina particles 1 becomes high, thereby resulting in decreased strength. The alumina powder preferably has a purity of 99.9 percent by mass or more.

A commercially available zirconia powder is used as the zirconia crystal source. The zirconia powder is preferably free of stabilizers but a zirconia powder containing a stabilizer can also be used. $Y_2O_3$ is preferred as a stabilizer. As previously stated, the amount of stabilizer is preferably 2 mol% or less of zirconia ($ZrO_2$) to effectively avoid a decrease in hot-water resistance.

The average particle diameter of the zirconia powder is preferably 0.5 $\mu$m or less and more preferably 0.4 $\mu$m or less. When a powder with a large average particle diameter is used, the average crystal grain diameter of the zirconia particles 3 becomes large and this promotes phase transformation from tetragonal zirconia to monoclinic Zirconia. Thus, addition of zirconia would not sufficiently increase the toughness. The zirconia powder contains inevitable imparities such as hafnia ($HfO_2$) but preferably has a purity of 99.9 percent by mass or more.

In the present invention, the alumina powder and the zirconia powder are used at a ratio by mass of 65/35 to 90/10, in particular, 75/25 to 85/15 so that the ratio of the alumina particles 1 to the zirconia particles 3 satisfies the above-described range.

A powder of an alkaline-earth metal compound is used as a powder to be used together with the alumina powder and the zirconia powder, as the source of the columnar crystal. The alkaline-earth metal compound is not particularly limited so long as the compound can be converted to an oxide by firing. For example, a compound other than oxides can be used. However, carbonate salts are preferably used and strontium carbonate ($SrCO_3$) is most preferably used. This is because strontium carbonate has low moisture absorption for carbonate compounds, is environmentally stable, is easily decomposable by calcining and firing, and has an effect of increasing the mechanical strength by a small amount of addition. Moreover, use of Sr suppresses generation of a liquid phase at low temperatures and grain growth, and the toxicity of the component is low. In order to rapidly precipitate the columnar crystal, it is most preferable to use a titanium oxide ($TiO_2$) powder together with the powder of the alkaline-earth metal compound described above.

The alkaline-earth metal compound powder and the titanium oxide powder preferably have an average particle diameter of 1 $\mu$m or less and in particular 0.5 $\mu$m or less to allow fine columnar crystals 5 to precipitate in a homogeneously dispersed state. The amounts of these powders used should be adjusted so that the ratio of the precipitated columnar crystals 5 satisfies a predetermined area ratio. In other words, as described above, the amount of the alkaline-earth metal compound powder is 0.24 parts by mass or more on an oxide basis per total of 100 parts by mass of the alumina powder and the zirconia powder. The amount of the titanium oxide powder is adjusted such that the total amount of the titanium oxide powder and the alkaline-earth metal compound powder is 0.4 to 3 parts by mass per total of 100 parts by mass of the alumina powder and the zirconia powder on an oxide basis.

In the present invention, an oxide powder of Si, Zn, Nb, Ta, or the like may be used as a sintering aid to increase the sinterability, if necessary. An oxide powder of Cr, Mn, Fe, Co, Ni, or the like may be added as a coloring agent for coloring. Naturally, the powders for the sintering aid and the coloring agent are not limited to oxides. For example, a compound that can form an oxide by firing, such as a hydroxide, carbonate, complex metal oxide, alkoxide, or the like, may be added. The average particle diameter of the sintering aid and the coloring agent is usually 1 $\mu$m or less and preferably 0.5 $\mu$m or less. The additive components Mn, Fe, Co, and Ni are favored since they can enhance the sinterability of the ceramic. The total amount of the sintering aid powder and the coloring agent powder is preferably 3 parts by mass or less and more preferably 2 parts by mass or less per total of 100 parts by mass of the zirconia powder and the alumina powder.

-- Preparation of molding powder --

Of the powdered starting materials described above, the alumina powder, the alkaline-earth metal powder, and, optionally, the silicon oxide powder, the sintering aid powder, and a coloring agent powder are mixed to satisfy the content ratio described above, and the resulting mixed powder is calcined in order to make a composite ceramic of the present invention. The alkaline-earth metal compound, the silicon oxide powder, and the alumina powder become bonded to each other by calcining. The calcining temperature is typically preferably 700°C to 1000°C, and the amount of time of calcining is usually about 0.5 to 5 hours.

The calcined powder obtained by calcining is mixed with a predetermined amount of the zirconia powder to obtain a molding powder. That is, the target composite ceramic can be obtained by subjecting the molding powder obtained by such calcining to the molding and firing step described below. For example, if the mixture of the powdered starting materials is directly molded and fired without calcining as above, grain growth in the alumina particles 1 or the zirconia particles 3 cannot be effectively suppressed, and columnar crystals 5 of desirable sizes cannot be precipitated, resulting in failure to enhance mechanical properties and hot-water resistance.

The sintering aid powder and the coloring agent powder may be mixed to the calcined powder along with the zirconia powder if occasion demands.

-- Molding and firing --

Molding of the molding powder described above is conducted by a standard method in which a slurry or paste is prepared using water, a solvent such as an organic solvent, and an organic binder if necessary (alternatively, a powder is prepared by drying the slurry or the paste), and the slurry, paste, or powder is formed into a predetermined shape. Press-molding, casting, cold isostatic molding, cold isostatic pressure treatment, or other known methods may be employed as the forming method.

The resulting compact is then fired. The firing is conducted in an oxidizing atmosphere such as air at a temperature of 1600°C or less, in particular, 1300°C to 1550°C. Firing at an excessively high temperature causes grain growth in the zirconia particles 3 and the alumina particles 1 and decreases the flexural strength and hardness. If the firing temperature is excessively low, it is difficult to obtain a dense sintered body. When firing is conducted in a reducing atmosphere, zirconia is reduced to give zirconium, nitrides, and the like.

The firing is conducted until the relative density of the sintered body determined by the Archimedean method is 95% or more, in particular 98% or more. The length of time of firing is usually about 1 to 10 hours.

In the present invention, hot isostatic pressure firing at a temperature of 1500 °C or less, in particular 1400 °C or less, and most preferably 1200°C to 1350°C is preferably performed for usually about 1 to 2 hours in an argon gas atmosphere or an oxidizing atmosphere (e.g., Ar gas containing 20% oxygen) after the above-described process of firing. According to this process, the grain grown in the zirconia particles and the alumina particles constituting the composite ceramic can be effectively suppressed to achieve higher density. For example, the relative density of the sintered body can be increased to 99% or more.

When hot isostatic pressure firing is conducted in argon gas, oxygen vacancies occur in $ZrO_2$ at high temperature, resulting in darkening in color. Thus, in order to prevent oxygen vacancies from occurring, the sintered body is heat-treated in air after the hot isostatic pressing or subjected to hot isostatic pressing in an oxygen-containing atmosphere to obtain a sintered body without coloring.

In this manner, the alumina-zirconia composite ceramic of the present invention having the above-described composition and properties can be obtained.

EXAMPLES

Superior effects of the present invention are described below by way of experimental examples.

An alumina powder having an average crystal diameter of 0.3 $\mu$m and a purity of 99.9 percent by mass was mixed with various additives shown in Table 1, and the resulting mixture was calcined at 800°C for 1 hour. A zirconia powder having an average crystal diameter of 0.3 $\mu$m and a purity of 99. 9 percent by mass was added to the calcined powder at a ratio shown in Table 1 to prepare a molding powder.

Mixing of the alumina powder and the various additives and mixing of the zirconia powder and the calcined powder were both conducted by wet ball mill mixing (mixing time: 100 hours) in a polyethylene vessel with high-purity wear-resistant alumina balls and isopropanol (IPA) as a solvent.

The molding powder obtained as above was dried, press-molded, and fired at 1400°C to 1550°C for 2 hours in air to prepare a bar-shaped sintered specimen.

Next, hot isostatic pressing (HIP) was conducted under conditions (atmosphere and temperature) shown in Table 1 for 1 hour to obtain a dense sintered body having a relative density of 99.5% or more (Samples 1 to 16).

For comparison, Sample 1 was prepared without using additives, Sample 6 was prepared without HIP after firing in air, and Sample 14 was prepared by omitting calcining, i.e., by mixing the alumina powder, the zirconia powder, and various additive powders in one step to obtain a molding powder.

Each sintered body obtained as above was ground to prepare a 4 × 3 × 35 mm specimen, and the flexural strength was measured. The crystal structure was observed with a scanning electron microscope and a transmission electron microscope, the composition of the columnar crystals was analyzed, and various properties were evaluated. The results are shown in Table 2.

In the crystal structure observation, the average crystal diameter and the aspect ratio of the zirconia particles and the alumina particles was determined for the crystals that lay on the diagonal line of the electron micrograph. Here, the averages of the major axis and the minor axis of the particles were taken. The aspect ratio was determined by the ratio of the major axis to the minor axis, i.e., major axis/minor axis. The ratio of the area occupied by the columnar crystals having an aspect ratio greater than 3 to the total area of the zirconia particles and the alumina particles was determined as the average of the aspect ratios taken at 10 points arbitrarily selected in a cross-section in the area of 4.5 $\mu$m × 6.0 $\mu$m under observation with a scanning electron microscope (magnification: x20000).

As for the properties, the flexural strength at room temperature was determined by Japanese Industrial Standard (JIS) R1601, the flexural strength after hydrothermal degradation test (120°C × 300 hours at 100% RH) was determined, the fracture toughness was determined by a single edge precracked beam (SEPB) method according to JIS-R1607, and the Vickers hardness was determined according to JIS-R1610. The identification of the crystal phases was conducted by XRD.

Table 1

| Sample No. | Zirconia powder content | Alumina powder content | Additives | | | Method of adding sintering aid | Firing | HIP |
|---|---|---|---|---|---|---|---|---|
| | | | TiO2 | SrCO3 | MS (MgO:SiO2=1:1) or CY (CeO2:Y2O3=1:1) | | | |
| | Mass % | Mass % | Mass % | Mass % | Mass % | | °C | °C |
| * 1 | 20 | 80 | 0 | 0 | - | One-step | 1500 | 1450 |
| 2 | 20 | 80 | 0.5 | 0.24 | - | Two-step | 1500 | 1450 |
| 3 | 20 | 80 | 1 | 0.47 | - | Two-step | 1450 | 1450 |
| 4 | 20 | 80 | 2 | 0.95 | - | Two-step | 1450 | 1400 |
| 5 | 20 | 80 | 3 | 1.42 | - | Two-step | 1400 | 1400 |
| 6 | 20 | 80 | 1 | 0.95 | - | Two-step | 1550 | - |
| 7 | 30 | 70 | 1 | 0.95 | MS 1% | Two-step | 1400 | 1350 |
| 8 | 20 | 80 | 1 | 0.95 | MS 1% | Two-step | 1400 | 1350 |
| 9 | 10 | 90 | 1 | 0.95 | MS 1% | Two-step | 1400 | 1350 |
| 10 | 35 | 65 | 1 | 0.95 | CY 2% | Two-step | 1400 | 1350 |
| 11 | 15 | 85 | 1 | 0.95 | CY 3% | Two-step | 1400 | 1350 |
| * 14 | 20 | 80 | 1 | 0.47 | - | One-step | 1450 | 1450 |
| 15 | 20 | 80 | 0.5 | $CaCO_3$ : 1.0 | MS 1% | Two-step | 1350 | 1300 |
| 16 | 20 | 80 | 0.5 | $BaCO_3$: 1.0 | MS 1% | Two-step | 1350 | 1300 |

*: Samples outside the range of the present invention
** One-step: All ingredient powders were mixed in one step and fired. Two-step: Sintering aid and alumina powder were mixed in advance and calcined, and the resulting calcined powder was mixed with zirconia powder.

Table 2

| Sample No. | Average crystal diameter | | Aspect ratio of alumina particles | Crystal phase other than alumina and zirconia** | Area percentage of crystal phase other than alumina and zirconia | Fracture toughness | Vickers hardness | Flexural strength (MPa) | Flexural strength after hydrothermal degradation test (MPa) |
|---|---|---|---|---|---|---|---|---|---|
| | Zirconia particles | Alumina particles | | | | | | | |
| | μm | μm | | | | GPa | (Hv) | MPa | MPa |
| * 1 | 0.3 | 0.9 | 2.2 | - | - | 4.8 | 1710 | 960 | 920 |
| 2 | 0.3 | 1.0 | 2.3 | STA | 1.4 | 5.3 | 1720 | 1190 | 1110 |
| 3 | 0.4 | 1.1 | 2.2 | STA | 4.2 | 5.6 | 1710 | 1280 | 1210 |
| 4 | 0.3 | 1.0 | 2.4 | STA | 11.2 | 5.9 | 1690 | 1250 | 1180 |
| 5 | 0.4 | 1.3 | 2.5 | STA | 16.8 | 5.8 | 1650 | 1090 | 1040 |
| 6 | 0.5 | 1.5 | 2.2 | STA"SA | 7.2 | 5.5 | 1680 | 1070 | 1020 |
| 7 | 0.4 | 0.8 | 2.4 | STA" SA | 6.7 | 4.9 | 1640 | 1320 | 1160 |
| 8 | 0.3 | 0.9 | 2.5 | STA" SA | 6.4 | 5.2 | 1720 | 1380 | 1210 |
| 9 | 0.3 | 1.1 | 2.6 | STA" SA | 7.2 | 4.5 | 1810 | 1050 | 1010 |
| 10 | 0.4 | 0.9 | 2.8 | STA" SA | 7.5 | 5.6 | 1610 | 1240 | 1170 |
| 11 | 0.3 | 1.0 | 2.9 | STA" SA | 7.7 | 5.1 | 1760 | 1430 | 1360 |
| * 14 | 0.7 | 2.5 | 3.5 | - | - | 5.7 | 1600 | 950 | 720 |
| 15 | 0.4 | 0.9 | 2.4 | CTA" CA | 6.2 | 5.3 | 1690 | 1270 | 1140 |
| 16 | 0.3 | 0.7 | 2.2 | BTA" BA | 4.8 | 5 | 1730 | 1360 | 1190 |

*: Samples outside the range of the present invention

**; Crystal phase CTA: $Ca_3Ti_8Al_{12}O_{37}$, STA: $SrTi_3Al_8O_{19}$, BTA: $Ba_3TiAl_{10}O_{20}$ CA: $CaAl_{12}O_{19}$, SA: $SrAl_{12}O_{19}$, Ba: $BaAl_{12}O_{19}$

EP 1 845 072 B1

As is apparent from the results shown in Tables 1 and 2, Samples 2 to 11, 15, and 16 (invention examples), in which columnar crystals having an aspect ratio of greater than 3 were generated and the alumina particles was granular with an aspect ratio of 3 or less, showed a fractural toughness of 4. 5 or more, a Vickers hardness of 1610 or more, a flexural strength of 1050 MPa or more, and a flexural strength of 700 MPa or more, in particular, 1010 MPa or more, after hydrothermal degradation test. Samples outside the scope of the present invention were poor in at least one of fracture toughness, Vickers hardness, flexural strength, and flexural strength after hydrothermal degradation test.

**Claims**

1. A composite ceramic comprising: granular alumina particles (A), granular zirconia particles (B), and a columnar crystal (C) of a complex metal oxide containing an alkaline-earth metal element and aluminum element, wherein the composite ceramic comprises titanium, the alkaline-earth metal is Ca, Sr or Ba, and wherein titanium and the alkaline earth metal are contained in a total amount of 0.4 to 3 percent by mass on an oxide basis.

2. The composite ceramic according to claim 1, wherein the columnar crystal (C) of the complex metal oxide has an aspect ratio greater than 3.

3. The composite ceramic according to claim 1, wherein the granular alumina particles (A) and the zirconia granular particles (B) are present at a ratio (A/B) by mass of 65/35 to 90/10.

4. The composite ceramic according to claim 1, wherein the average crystal diameter of the alumina particles (A) is 1.5 $\mu$m or less, and the average crystal diameter of the zirconia particles (B) is 0.5 $\mu$m or less.

5. The composite ceramic according to claim 1, wherein the complex metal oxide is at least one selected from the group consisting of $Ca_3T_{18}Al_{12}O_{37}$, $SrTi_3Al_8O_{19}$, $Ba_3TiAl_{10}O_{20}$, $CaAl_{12}O_{19}$, $SrAl_{12}O_{19}$ and $BaAl_{12}O_{19}$.

6. The composite ceramic according to claim 1, wherein the composite ceramic has a Vickers hardness of 1600 (Hv) or more, a fracture toughness of 4.5 or more, and a flexural strength after hydrothermal degradation test of 1050 MPa or more.

7. The composite ceramic according to claim 1, wherein the ratio of the area of the columnar crystal (C) to the total area of the granular alumina particles (A) and the granular zirconia particles (B) is 1% to 20% of a 4.5 $\mu$m x 6.0 $\mu$m area in a cross-section by observation with an electron microscope.

8. A method for making a composite ceramic as defined in claim 1, comprising:

   mixing an alumina powder having an average particle diameter of 2 $\mu$m or less with a titanium oxide powder and with a powder containing an alkaline-earth metal element;
   preliminarily calcining the resulting mixed powder such that the alumina powder bonds to the powder containing the alkaline-earth metal element;
   preparing a molding powder by mixing the resulting calcined powder with a zirconia powder having an average particle diameter of 0.5 $\mu$m or less; and
   molding the molding powder into a predetermined shape and firing the molded powder at 1600°C or less in an oxidizing atmosphere.

9. The method for making the composite ceramic according to claim 8, wherein at least one of a strontium carbonate powder, a calcium carbonate powder, and a barium carbonate powder is used as the powder containing the alkaline-earth metal element.

10. The method for making the composite ceramic according to claim 8, wherein 0.2 parts by mass or more of the titanium oxide powder and 0.2 parts by mass of the powder containing the alkaline-earth metal element are used per total of 100 parts by mass of the alumina powder and the zirconia powder mixed after the preliminary calcining.

11. The method for making the composite ceramic according to claim 8, further comprising a step of hot-isostatic pressure firing at 1500°C or less after the firing step.

12. A sliding component comprising the composite ceramic of claim 1.

**13.** Use of a composite ceramic as defined in claim 1 as a sliding component.

**Patentansprüche**

**1.** Eine Verbundkeramik, aufweisend: körnige Aluminiumoxidpartikel (A), körnige Zirkonoxidpartikel (B) und einen Stängelkristall (C) eines komplexen Metalloxids, das ein Erdalkalimetallelement und ein Aluminiumelement enthält, wobei die Verbundkeramik Titan aufweist, das Erdalkalimetall Ca, Sr oder Ba ist, und wobei Titan und das Erdalkalimetall in einer Gesamtmenge von 0,4 bis 3 Masse-% auf einer Oxidbasis enthalten sind.

**2.** Die Verbundkeramik gemäß Anspruch 1, wobei der Stängelkristall (C) des komplexen Metalloxids ein Aspektverhältnis von größer als 3 hat.

**3.** Die Verbundkeramik gemäß Anspruch 1, wobei die körnigen Aluminiumoxidpartikel (A) und die körnigen Zirkonoxidpartikel (B) in einem Masseverhältnis (A/B) von 65/35 bis 90/10 vorliegen.

**4.** Die Verbundkeramik gemäß Anspruch 1, wobei der mittlere Kristalldurchmesser der Aluminiumoxidpartikel (A) 1,5 $\mu$m oder weniger beträgt und der mittlere Kristalldurchmesser der Zirkonoxidpartikel (B) 0,5 $\mu$m oder weniger beträgt.

**5.** Die Verbundkeramik gemäß Anspruch 1, wobei das komplexe Metalloxid mindestens eines ist, das aus der Gruppe bestehend aus $Ca_3Ti_8Al_{12}O_{37}$, $SrTi_3Al_8O_{19}$, $Ba_3TiAl_{10}O_{20}$, $CaAl_{12}O_{19}$, $SrAl_{12}O_{19}$ und $BaAl_{12}O_{19}$ ausgewählt ist.

**6.** Die Verbundkeramik gemäß Anspruch 1, wobei die Verbundkeramik eine Vickershärte von 1600 (Hv) oder mehr, einen Bruchwiderstand von 4,5 oder mehr und eine Biegefestigkeit nach hydrothermalem Abbautest von 1050 MPa oder mehr hat.

**7.** Die Verbundkeramik gemäß Anspruch 1, wobei das Verhältnis der Fläche des Stängelkristalls (C) zu der Gesamtfläche der körnigen Aluminiumoxidpartikel (A) und der körnigen Zirkonoxidpartikel (B) 1% bis 20% einer 4,5 $\mu$m x 6,0 $\mu$m Fläche in einem Querschnitt durch Betrachtung mit einem Elektronenmikroskop beträgt.

**8.** Ein Verfahren zum Herstellen einer Verbundkeramik wie in Anspruch 1 definiert, aufweisend:

Mischen eines Aluminiumoxidpulvers mit einem mittleren Partikeldurchmesser von 2 $\mu$m oder weniger mit einem Titanoxidpulver und mit einem Pulver, das ein Erdalkalimetallelement enthält,
vorübergehendes Kalzinieren des resultierenden gemischten Pulvers, so dass das Aluminiumoxidpulver an das Pulver bindet, das das Erdalkalimetallelement enthält,
Zubereiten eines Formpulvers durch Mischen des resultierenden kalzinierten Pulvers mit einem Zirkonoxidpulver mit einem mittleren Partikeldurchmesser von 0,5 $\mu$m oder weniger, und
Formen des Formpulvers zu einer vorbestimmten Form und Brennen des geformten Pulvers bei 1600°C oder weniger in einer oxidierenden Atmosphäre.

**9.** Das Verfahren zum Herstellen der Verbundkeramik gemäß Anspruch 8, wobei mindestens eines von einem Strontiumcarbonatpulver, einem Calciumcarbonatpulver und einem Bariumcarbonatpulver als das Pulver verwendet wird, welches das Erdalkalimetallelement enthält.

**10.** Das Verfahren zum Herstellen der Verbundkeramik gemäß Anspruch 8, wobei 0,2 Masseteile oder mehr des Titanoxidpulvers und 0,2 Masseteile des Pulvers, welches das Erdalkalimetallelement enthält, pro insgesamt 100 Masseteilen des Aluminiumoxidpulvers und des Zirkonoxidpulvers verwendet werden, die nach dem vorübergehenden Kalzinieren gemischt werden.

**11.** Das Verfahren zum Herstellen der Verbundkeramik gemäß Anspruch 8, ferner aufweisend einen Schritt des heißisostatischen Druck-Brennens bei 1500°C oder weniger nach dem Schritt des Brennens.

**12.** Ein Gleitelement/Schiebeelement, aufweisend die Verbundkeramik gemäß Anspruch 1.

**13.** Verwendung einer Verbundkeramik wie in Anspruch 1 definiert als ein Gleitelement/Schiebeelement.

**Revendications**

1. Une céramique composite, comportant : des particules granulaires d'alumine (A), des particules granulaires de zircone (B) et un cristal prismatique (C) d'un oxyde métallique complexe contenant un élément de métal alcalinoterreux et un élément d'aluminium, dans laquelle la céramique composite comporte du titane, le métal alcalinoterreux est Ca, Sr ou Ba, et dans laquelle le titane et le métal alcalinoterreux sont contenus en une quantité totale de 0,4 à 3 % en masse sur une base d'oxydes.

2. La céramique composite selon la revendication 1, dans laquelle le cristal prismatique (C) de l'oxyde métallique complexe a un rapport d'aspect supérieur à 3.

3. La céramique composite selon la revendication 1, dans laquelle les particules granulaires d'alumine (A) et les particules granulaires de zircone (B) sont présentes en un rapport massique (A/B) de 65/35 à 90/10.

4. La céramique composite selon la revendication 1, dans laquelle le diamètre moyen de cristal des particules d'alumine (A) est 1,5 $\mu$m ou moins, et le diamètre moyen de cristal des particules de zircone (B) est 0,5 $\mu$m ou moins.

5. La céramique composite selon la revendication 1, dans laquelle l'oxyde métallique complexe est au moins un choisi dans le groupe constitué par $Ca_3Ti_8Al_{12}O_{37}$, $SrTi_3Al_8O_{19}$, $Ba_3TiAl_{10}O_{20}$, $CaAl_{12}O_{19}$, $SrAl_{12}O_{19}$ et $BaAl_{12}O_{19}$.

6. La céramique composite selon la revendication 1, dans laquelle la céramique composite a une dureté de Vickers de 1600 (HV) ou plus, une résistance à la fracture de 4,5 ou plus, et une résistance à la flexion après essai de dégradation hydrothermale de 1050 MPa ou plus.

7. La céramique composite selon la revendication 1, dans laquelle le rapport de la surface du cristal prismatique (C) à la surface totale des particules granulaires d'alumine (A) et des particules granulaires de zircone (B) est de 1 % à 20 % d'une surface de 4,5 $\mu$m x 6,0 $\mu$m en coupe transversale lors d'une observation par microscope électronique.

8. Un procédé de fabrication d'une céramique composite telle que définie dans la revendication 1, comportant :

   le mélange d'une poudre d'alumine ayant un diamètre moyen de particule de 2 $\mu$m ou moins avec une poudre d'oxyde de titane et avec une poudre contenant un élément de métal alcalinoterreux,
   la calcination préliminaire de la poudre mélangée obtenue, de sorte que la poudre d'alumine se lie à la poudre contenant l'élément de métal alcalinoterreux,
   la préparation d'une poudre de moulage en mélangeant la poudre calcinée obtenue avec une poudre de zircone ayant un diamètre moyen de particule de 0,5 $\mu$m ou moins, et
   le moulage de la poudre de moulage en une forme prédéterminée et le cuisson de la poudre moulée à 1600°C ou moins dans une atmosphère oxydante.

9. Le procédé de fabrication de la céramique composite selon la revendication 8, dans lequel au moins une parmi une poudre de carbonate de strontium, une poudre de carbonate de calcium et une poudre de carbonate de baryum est utilisée comme poudre contenant l'élément de métal alcalinoterreux.

10. Le procédé de fabrication de la céramique composite selon la revendication 8, dans lequel 0,2 parties en masse ou plus de la poudre d'oxyde de titane et 0,2 parties en masse de la poudre contenant l'élément de métal alcalinoterreux sont utilisées pour un total de 100 parties en masse de la poudre d'alumine et la poudre de zircone mélangées après la calcination préliminaire.

11. Le procédé de fabrication de la céramique composite selon la revendication 8, comportant en outre une étape de cuisson de compression isostatique à chaud à 1500°C ou moins après l'étape de cuisson.

12. Une pièce coulissante comportant la céramique composite selon la revendication 1.

13. Utilisation d'une céramique composite telle que définie dans la revendication 1 comme pièce coulissante.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7064631 A
- JP 2910020 B
- JP 05017210 B
- US 5002911 A

**Non-patent literature cited in the description**

- *Journal of the European Ceramic Society,* 1999, vol. 19, 1741-1746